# EUROPÄISCHE PATENTSCHRIFT

(11) **EP 0 785 226 B1**
(45) Veröffentlichungstag und Bekanntmachung des Hinweises auf die Patenterteilung: **05.11.2003**
(21) Anmeldenummer: 97100723.2
(22) Anmeldetag: 17.01.1997
(51) Int. Cl.: C08J 3/20, C08K 5/14

(54) **Verfahren zum gleichmässigen und dauerhaften Verteilen von Peroxiden in Polyethylen**
Method for regular and permanent distribution of peroxides in polyethylene
Procédé pour la distribution regulière et permanente de peroxides dans le polyéthylène

(30) Priorität: 17.01.1996 DE 19601498
(43) Veröffentlichungstag der Anmeldung: 23.07.1997
(73) Patentinhaber: Buna Sow Leuna Olefinverbund GmbH, 06258 Schkopau (DE)
(72) Erfinder: Schaar, Erich, Dr,, 06122 Halle (DE); Germann, Klaus, Dr., 06237 Leuna (DE); Bartschek, Klaus, 06237 Leuna (DE); Freier, Michael, 06122 Halle (DE); Häussler, Wolfgang, 06122 Halle (DE)
(74) Vertreter: Weickmann, Heinrich

(56) Entgegenhaltungen:
- DE-A- 2 439 534
- US-A- 3 956 214
- US-A- 4 522 957

## Beschreibung

Die vorliegende Erfindung betrifft ein kontinuierliches Verfahren zur Herstellung von mit Peroxiden vernetzbarem Polyethylen oder Polyethylencompounds.

Vernetzbare Polyolefine dienen in der Kabelindustrie als Basismittel für die Herstellung von Isolier- und Mantelwerkstoffen für elektrische Leitungen. Die Anforderungen an die Leistungsfähigkeit dieser Werkstoffe sind stetig gewachsen. Eine der kritischen Größen ist dabei die elektrische Durchschlagfähigkeit. Neben dem hohen Reinheitsgrad der eingesetzten Werkstoffe sind dafür die gleichmäßige Vernetzung, die eine möglichst homogene Verteilung des eingearbeiteten Peroxids voraussetzt, und eine einheitliche, von Störstellen freie morphologische Struktur von wesentlicher Bedeutung.

Es ist bekannt (EP 357, DE 24 32 758), die Peroxide als Vernetzungsmittel in fester, gelöster oder geschmolzener Form oder auch als Masterbatch dem Polyolefin zuzugegeben und in einem Extruder oberhalb des Schmelzpunktes des Polyolefins in diesem zu vermischen. Dabei besteht jedoch durch die vergleichsweise hohe erforderliche Temperatur die Gefahr der Anvernetzung des Polyolefins mit den entsprechenden Nachteilen bei der Weiterverarbeitung. Außerdem wird die morphologische Struktur des eingesetzten Polyolefins verändert.

Bekannt ist auch die Einarbeitung des Peroxides in gelöster oder geschmolzener Form in festes oder oberflächlich angeschmolzenes Polyolefinpulver oder -granulat in Mischern ( DE 24 39 534, JP 82-65 726 ). Ein wesentlicher Nachteil dieser Verfahrensweise resultiert aus der hohen mechanischen Belastung der Polyolefinteilchen, die zur Entstehung von staubförmigen Abrieb führt. Ein weiterer Nachteil dieser Einarbeitungsvariante ist die diskontinuierliche Verfahrensweise.

In US 3 956 214 wird ein Verfahren zur Herstellung vernetzbarer Pellets von Polyethylen und Copolymeren von Polyethylen durch Mischen der Pellets mit dem Vernetzungsmittel bei einer Temperatur unterhalb des Erweichungspunktes von Polyethylen oder deren Copolymeren beschrieben. Verfahrensgemäß wird zunächst von außen Wärme zugeführt, um die Granulatoberfläche mehr zu erhitzen als den Kern und sie kurzzeitig zu erweichen. Nach der Peroxidzugabe wird einstufig auf etwa 15 bis 25 °C abgekühlt. Nachteilig dabei ist, dass im Inneren der Pellets die Temperatur niedriger als in den Außenschichten ist und die Grenztemperatur für das Festwerden des Peroxides schneller erreicht wird und danach eine weitere Diffusion ins Innere des Pellets nicht mehr möglich ist.

Der Erfindung liegt deshalb die Aufgabe zugrunde, eine dauerhafte und im wesentlichen homogene Verteilung des Peroxides in Polyethylen, das gegebenenfalls Comonomere oder Zusatzstoffe, zum Beispiel Verarbeitungsstabilisatoren enthält, bei kontinuierlicher Arbeitsweise bei geringer thermischer und mechanischer Belastung zu erreichen. Die Gefahr der Anvernetzung sollte ausgeschlossen und die Beeinflussung der morphologischen Struktur des eingesetzten Polyethylens möglichst gering sein.

Gelöst wird die Aufgabe durch das in den Ansprüchen 1 bis 6 dargestellte Verfahren. Das Peroxid wird als Schmelze im Gegenstrom in einen frei fließenden, auf 343 K bis 373 K temperierten Granulatstrom aus Polyethylen oder Polyethylencompound eingesprüht, das benetzte Granulat anschließend ohne wesentlichen Wärmeaustausch mit der Umgebung wenigstens 60 Minuten getempert und danach in Stufen abgekühlt.

Als Peroxid können organische Peroxide oder Peroxidgemische verwendet werden, deren Schmelzpunkt 333 K nicht überschreitet, wie z.B. Dicumylperoxid oder Bis-(2-tert-butylperoxipropyl-(2))-benzol. Der technisch relevante Konzentrationsbereich für Peroxid im Polyethylen liegt bei Kabelanwendungen zwischen etwa 1,5 und 2,5 Masse-%. In diesem Bereich ist eine ausreichende Vernetzungseffizienz ohne störende Zerfallsprodukte des Peroxids zu erzielen. Dieser Konzentrationsbereich ist bei erfindungsgemäßem Verfahren nur nach oben begrenzt durch die theoretische Aufnahmefähigkeit der Polymermatrix für die jeweils zum Einsatz kommenden Hilfsstoffe. Das erfindungsgemäße Verfahren ist außer für Peroxid auch für die Dosierung anderer niedermolekularer Hilfsstoffe geeignet, wenn sie im vorgegebenen Temperaturbereich flüssig dosiert bzw. verdüst werden können.
Als Stabilisatoren können übliche Verarbeitungsstabilisatoren oder Stabilisatorgemische verwendet werden. In Kombination mit Vernetzungsperoxiden sind insbesondere 2,2'-Thiobis(4-methyl-6-tert-butylphenol) oder sein Isomeres, das 4,4'-Thio-bis(3-methyl-6-tert-butylphenol) geeignet. Bevorzugte Polyethylentypen sind LDPE-Homopolymere oder -Copolymere mit bis zu 8 Masseprozent Vinylazetat oder Ethylacrylat oder Butylacrylat sowie Gemische aus LDPE und Ethylen-Alkylacrylatcopolymeren.
In Durchführung des erfindungsgemäßen Verfahrens wird das Polyethylen in Form von Granulat eingesetzt, das bereits den Stabilisator enthält und eine gleichmäßige, von morphologischen Stötstellen freie Struktur aufweist. Das auf eine Temperatur von 343 K bis 373 K vortemperierte Granulat wird mit beheizter Förderluft dem Kopf eines vertikalen, gut isolierten Diffusionsrohres zugeführt. Dort durchquert es im freien Fall eine Beschichtungszone, in die das flüssige Peroxid im Gegenstrom eingesprüht wird.

In einer bevorzugten Ausführungsform der Erfindung wird der Granulatstrom durch geeignete Einbauten am Eingang des Diffusionsrohres in Form einer Mantelströmung in die Nähe der Innenwand des Rohres geleitet. Dadurch kann eine besonders gleichmäßige Oberflächenbenetzung der einzelnen Granulatkörner gewährleistet werden.

Uberraschenderweise hat sich gezeigt, daß eine höhere Temperatur im Granulatkern gegenüber der Oberfläche die dauerhafte Aufnahme der niedermolekularen Verbindung in die Polymermatrix begünstigt. Die Temperatur der Förderluft wird deshalb vorzugsweise so eingestellt, daß das Granulat in der Beschichtungszone einen Temperaturgradienten von der Oberfläche zum Kern von + 5 K oder mehr aufweist. In einfachster Weise erhält man diese Temperaturbedingungen, wenn das Granulat direkt aus einer vorangegangenen Extrusionsbearbeitung entnommen wird. Die Kerntemperatur kann dadurch in der Nähe des Schmelzbereiches des Polyethylens gehalten werden.
Nach Verlassen der Beschichtungszone durchläuft das Granulat in einer kontinuierlichen Strömung unter möglichst adiabaten Bedingungen eine Diffusionszone, in der das Granulat bei einer Temperatur zwischen 343 K und 373 K getempert wird. Die erforderliche Verweilzeit in dieser Zone beträgt zwischen 60 Minuten und 240 Minuten. Innerhalb dieser Zeitspanne wird der Temperaturgradient über den Kornquerschnitt abgebaut und das Peroxid über das gesamte Volumen der einzelnen Granulatkörner verteilt.
Durch eine sehr schlanke Gestaltung des Diffusionsgefäßes erreicht man ein besonders enges Verweilzeitspektrum für das Granulat und damit eine einheitliche Morphologie.
Nach Verlassen der Diffusionszone erfolgt eine schnelle Kühlung des Granulats auf eine Temperatur im Bereich von 313 K bis 338 K, vorzugsweise mit einer Abkühlgeschwindigkeit von mehr als 3 K/min und vorzugsweise auf eine Temperatur 5 K bis 10 K über der Temperatur des Schmelzpunktes des eingesetzten Peroxids. Vorzugsweise erfolgt die Abkühlung in dieser ersten Stufe mittels eines Luftstromes in einem Fließbettkühler.
In einer weiteren Kühlstufe gleicht sich die Granulattemperatur der Umgebungstemperatur an, das heißt, ohne zusätzliche äußere Temperierung kühlt sich das behandelte Granulat langsam auf die es umgebende Raumtemperatur ab.

### Ausführungsbeispiele

Gemäß der oben beschriebenen Technologie wurden versuchsweise folgende Temperatur- und Verweilzeitprogramme realisiert

| Versuch Nr. | I | II | III | IV | Vergleich | 1/2 |
|---|---|---|---|---|---|---|
| Granulattempetatur (K) | | | | | | |
| Oberfläche | 363 | 343 | 343 | 353 | 343 | 363 |
| Kern | 369 | 350 | 348 | 356 | 343 | 369 |

| Temperstufe | | | | | | |
|---|---|---|---|---|---|---|
| Endtemperatur (K) | 365 | 344 | 344 | 353 | 343 | 365 |
| Dauer (min) | 60 | 180 | 90 | 90 | 30 | 60 |

| 1 Kühlstufe | | | | | | |
|---|---|---|---|---|---|---|
| Temperaturgradient (K/min) | 12 | 3,5 | 5 | 8,5 | entfällt | 12 |
| Endtemperatur (K) | 330 | 333 | 338 | 328 | | 298 |

| 2 Kuhlstufe | | | | | | |
|---|---|---|---|---|---|---|
| Temperaturgradient (K/min) | 1 | 1 | 1 | 1 | 1 | entfällt |
| Endtemperatur (K) | 293 | 293 | 293 | 293 | 293 | |

### Zum Einsatz gelangten folgende Produkte:

Bei Versuch I und II sowie bei den Vergleichsversuchen:
LDPE-Granulat, MFI (190/2,16) 2,0 g/10 min
Dichte 0,921 g/ml
Stabilisatorgehalt 0,3 Masse-%
2,2'-Thio-bis(4-methyl-6-tert.-butylphenol)

### Bei Versuch III und IV:

### Compound aus LDPE und EBA-Copolymer mit 2,5 Masse-% Butylacrylat im Fertig-compound, MFI (190/2, 16) 2,1 g/10 min

Dichte 0,922 g/ml
Stabilisatorgehalt 0,3 Masse-%
4,4'-Thio-bis(3-methyl-6-tert.-butylphenol)

Bei allen Versuchen wurde eine Schmelze von Dicumylperoxid, temperiert auf 323 K, eingesetzt. Bei allen Versuchseinstellungen war das Mengenverhältnis Peroxid zu Granulat so eingestellt, daß sich im Fertigprodukt bei vollständiger Peroxidaufnahme ein Gehalt von 2,3 Masse-% ergibt.

Die Bewertung der Fertigprodukte erfolgte mittels Methanolwaschtest, durch visuelle und meßtechnische Bewertung von vernetzten Preßplatten und durch einen Extrusionsversuch.

Mit dem Methanolwaschtest wird das an der Granulatoberfläche befindliche Peroxid abgewaschen und in Relation zur behandelten Granulatmenge gesetzt. Durch die milden Bedingungen während des Waschvorganges (maximale Dauer 5 Minuten bei Raumtemperatur) wird eine Extraktion aus dem Inneren des Granulatkornes weitestgehend ausgeschlossen.
Die Begutachtung der vernetzten Preßplatten ermöglicht in einfacher Weise eine Bewertung der Peroxidverteilung und der Gleichmäßigkeit der Vernetzung Die Preßbedingungen
- 2 Minuten 393 K
- 7 Minuten 10 MPa / 393 → 453 K
- 10 Minuten 10 MPa/453 K
sind hinsiehtlich Vernetzungsausbeute auf das eingesetzte Basis-LDPE optimiert. Mit dem Verarbeitungsversuch sollen die aus der thermischen Vorgeschichte resultierenden Unterschiede in der Morphologie deutlich gemacht werden.

### Ergebnisse:

### Methanolwaschtest abwaschbare Menge Dicumylperoxid, bezogen auf die behandelte Granulatmenge (ppm)

- Versuch I: - 253
- Versuch II: - 271; nach 4 Wochen Lagerung 305
- Versuch III: - 297
- Versuch IV: - 224
- Versuch V: - 239
- Vergleich 1: - 573; nach 4 Wochen Lagerung 2367
- Vergleich 2: - 729

Visuelle Bewertung der Preßplatten:
- Versuch I - V: Platten äußerlich homogen
- Vergleich 1: Strukturen sichtbar, Bläschenbildung
- Vergleich 2: intensive Bläschenbildung, Platten verzogen

Wärmedehnung nach DIN VDE 0472 T. 615:
- Versuch I -: 58 % / nach Entlastung 0
- Versuch II -: 61 % / nach Entlastung 0
- Versuch III -: 55 % / nach Entlastung 0
- Versuch IV -: 49 % / nach Entlastung 0

- Vergleich 1 -: 102 % (einzelne Prüfkörper reißen während der Messung)
- Vergleich 2 -: Prüfkörper reißen

Ergebnis des Verarbeitungsversuches (Extrusion bei 405 K)
- Versuch I -: max. 30 kg/h bei guter Strangqualität
- Versuch II -: max. 31 kg/h hei guter Strangqualität
- Versuch III -: max. 33 kg/h bei guter Strangqualität
- Versuch IV -: max. 29 kg/h bei guter Strangqualität
- Vergleich 1 -: max. 23 kg/h bei guter Strangqualität
bei 30 kg/h mangelhafte Oberflächenqualität des extrudierten Stranges (Wellen und deutliche Rauhigkeit)
- Vergleich 2 -: max. 22 kg/h bei guter Strangqualität
bei 30 kg/h mangelhafte Oberflächenqualität des extrudierten Stranges (Wellen und deutliche Rauhigkeit)

## Patentansprüche

1. Verfahren zum gleichmäßigen und dauerhaften Verteilen von Peroxiden in Polyethylen oder Polyethylencompound, wobei das Polyethylen oder Polyethylencompound als Granulat vorliegt und das Peroxid einen Schmelzpunkt unter 334 K aufweist, **dadurch gekennzeichnet, daß** das aufgeschmolzene Peroxid verdüst, ein im freien Fall sich bewegender Granulatstrom aus Polyethylen oder Polyethylencompound mit einer Temperatur zwischen 343 K und 373 K im wesentlichen im Gegenstrom das Peroxid passiert, der mit Peroxid benetzte Granulatstrom anschließend ohne Wärmeaustausch getempert, danach in einer ersten Stufe auf 313 K bis 338 K und in einer zweiten Stufe auf Raumtemperatur abgekühlt wird.

2. Verfahren nach Anspruch 1, **dadurch gekennzeichnet, daß** die Granulatkörner des sich im freien Fall bewegenden Granulatstromes in ihrem Kern eine mindestens 5 K höhere Temperatur aufweisen als an der Oberfläche.

3. Verfahren nach den Ansprüchen 1 und 2, **dadurch gekennzeichnet, daß** das geschmolzene Peroxid zu einem Film in der Form eines Hohlkegels verdüst und dieser von den Granulatkörnern in Form einer Mantelströmung wesentlich im Gegenstrom passiert wird.

4. Verfahren nach den Ansprüchen 1 bis 3, **dadurch gekennzeichnet, daß** das mit Peroxid benetzte Granulat bei einer Temperatur von 343 K bis 373 K in einer Pfropfenströmung unter Ausputzung der Schwerkraft durch eine Temperaturzone innerhalb einer Zeit von 60 bis 240 min geführt wird.

5. Verfahren nach den Ansprüchen 1 bis 4, **dadurch gekennzeichnet, daß** das getemperte Granulat in einem Gasstrom mit einem Gradienten von mindestens 3 K/min auf eine Temperatur im Bereich von 313 K bis 338 K abgekühlt wird und anschließend Raumtemperatur erreicht.

6. Verfahren nach Anspruch 5, **dadurch gekennzeichnet, daß** das eingesetzte Peroxid einen Schmelzpunkt von 303 bis 313 K aufweist und das getemperte Granulat in der ersten Kühlstufe auf eine Temperatur von 5 - 10 K oberhalb der Schmelztemperatur des Peroxids gekühlt wird.

## Claims

1. Method for regular and permanent distribution of peroxides in polyethylen or a polyethylen compound, wherein the polyethylen or polyethylen compound is present in form of a granulated material and the peroxid has a melting point of less than 334 K, **characterized in that** the melted peroxide is atomized, a stream of granulated material of polyethylen or polyethylen compound having a temperature of between 343 K and 373 K moving in free fall passes the peroxide in an essentially countercurrent flow, the stream of granulated material wetted with peroxide is subsequently tempered without heat exchange, is afterwards cooled to from 313 K to 338 K in a first step and to room temperature in a second step.

2. Method according to claim 1, **characterized in that** the granules of the stream of granulated material moving in free fall have in their core a temperature being at least 5 K higher than that on the surface.

3. Method according to claim 1 or 2, **characterized in that** the melted peroxide is atomized to a film having the form of a hollow cone, and said hollow cone is passed from the granules in form of a sleeve flow in an essentially countercurrent flow.

4. Method according to any of claims 1 to 3, **characterized in that** the granulated material wetted with peroxide passes at a temperature of from 343 K to 373 K in a plug flow while utilizing gravity through a temperature zone within a period of 60 to 210 minutes.

5. Method according to any of claims 1 to 4, **characterized in that** the tempered granulated material is cooled in a gas stream with a gradient of at least 3 K/min to a temperature in the range of from 313 K to 338 K and subsequently reaches room temperature.

6. Method according to claim 5, **characterized in that** the peroxide employed has a melting point of from 303 K to 313 K and the tempered granulated material is cooled in the first cooling step to a temperature of from 5-10 K above the melting temperature of the peroxide.

## Revendications

1. Procédé permettant de répartir de manière homogène et durable des peroxydes dans du polyéthylène ou dans une composition de polyéthylène, dans lequel le polyéthylène ou la composition de polyéthylène se présente sous forme de granulat et le point de fusion du peroxyde est inférieur à 334 K, **caractérisé en ce qu'**on pulvérise du peroxyde fondu, on fait passer à travers le peroxyde, sensiblement à contre-courant, un courant de granulat de polyéthylène ou de composition de polyéthylène, en chute libre et à une température de 343 à 373 K, puis on laisse s'homogénéiser sans échange thermique la température du courant de granulat réticulé avec le peroxyde, et l'on fait refroidir le granulat, dans un premier temps jusqu'à une température de 313 à 338 K, et dans un second temps jusqu'à la température ambiante.

2. Procédé conforme à la revendication 1, **caractérisé en ce que** la température, au coeur des granules du courant de granulat en chute libre, est plus élevée d'au moins 5 K qu'à leur surface.

3. Procédé conforme aux revendications 1 et 2, **caractérisé en ce que** l'on pulvérise le peroxyde fondu de manière à en faire une nappe en forme de cône creux, et l'on fait traverser celle-ci, sensiblement à contre-courant, par les grains du granulat en écoulement périphérique.

4. Procédé conforme aux revendications 1 à 3, **caractérisé en ce que** l'on fait passer le granulat réticulé avec le peroxyde, à une température de 343 à 373 K, dans un courant de greffage, en tirant parti de la force de cisaillement, à travers une zone à température, en un laps de temps de 60 à 240 minutes.

5. Procédé conforme aux revendications 1 à 4, **caractérisé en ce que** l'on fait refroidir dans un courant de gaz le granulat à température homogénéisée, à une vitesse d'au moins 3 K/min, jusqu'à une température de 313 à 338 K, puis on le laisse revenir à la température ambiante.

6. Procédé conforme à la revendication 5, **caractérisé en ce que** le point de fusion du peroxyde utilisé vaut de 303 à 313 K et **en ce que** l'on fait refroidir le granulat à température homogénéisée, dans le premier temps de refroidissement, jusqu'à une température supérieure de 5 à 10 K au point de fusion du peroxyde.
